Europäisches Patentamt

European Patent Office

Office européen des brevets

(11) Veröffentlichungsnummer: **0 356 880**
**A2**

(12) ## EUROPÄISCHE PATENTANMELDUNG

(21) Anmeldenummer: 89115445.2

(51) Int. Cl.5: **C07F 9/40**

(22) Anmeldetag: 22.08.89

(30) Priorität: 02.09.88 DE 3829874

(43) Veröffentlichungstag der Anmeldung:
07.03.90 Patentblatt 90/10

(84) Benannte Vertragsstaaten:
AT BE CH DE ES FR GB IT LI NL SE

(71) Anmelder: BAYER AG

D-5090 Leverkusen 1 Bayerwerk(DE)

(72) Erfinder: Odenbach, Herbert, Dr.
Carl-Rumpff-Strasse 67
D-5090 Leverkusen 1(DE)
Erfinder: Block, Hans-Dieter, Dr.
Biesenbach 59
D-5090 Leverkusen 3(DE)
Erfinder: Immenkeppel, Michael, Dr.
Bücherstrasse 32
D-5300 Bonn 1(DE)

(54) Verfahren zur Synthese von Phosphonobernsteinsäuretetraethylester.

(57) Die vorliegende Erfindung betrifft ein verbessertes Verfahren zur Synthese von Phosphonobernsteinsäuretetramethylester und Phosphonobernsteinsäuretetraethylester in hohen Ausbeuten und aus leicht handhabbaren Edukten, bei dem man Dimethylphosphit bzw. Diethylphosphit mit Ethendicarbonsäuredimethylester bzw. Ethendicarbonsäurediethylester im Molverhältnis 1 : 1 bis 1 : 1,25, unter Zugabe von 1-10 Mol-% methanolischer Natriumethylatlösung bzw. ethanolischer Natriumethylatlösung, bezogen auf Dialkylphosphit, bei Temperaturen von 30-120 °C, zur Reaktion bringt.

EP 0 356 880 A2

# Verfahren zur Synthese von Phosphonobernsteinsäuretetramethylester und Phosphonobernsteinsäuretetraethylester

Die Erfindung betrifft ein verbessertes Verfahren zur Synthese von Phosphonobernsteinsäuretetramethylester und Phosphonobernsteinsäuretetraethylester in hohen Ausbeuten und aus leicht handhabbaren Edukten, bei dem man Dimethylphosphit bzw. Diethylphosphit mit Ethendicarbonsäuredimethylester bzw. Ethendicarbonsäurediethylester im Molverhältnis 1 : 1 bis 1 : 1,25, bevorzugt 1 : 1 bis 1 : 1,05, unter Zugabe von 1-10 Mol-% methanolischer Natriumethylatlösung bzw. ethanolischer Natriumethylatlösung, bezogen auf Dialkylphosphit bevorzugt 1-5 Mol-%, bei Temperaturen von 30-120° C, bevorzugt 50-100° C, zur Reaktion bringt.

Phosphonobernsteinsäuretetraalkylester, ganz besonders darunter die Tetramethyl- und Tetraethylester, sind bedeutsame Rohstoffe zur Herstellung zahlreicher Phosphonocarbonsäuren, die als stein- und/oder korrosionsschützende Chemikalien in der Wasserbehandlung einge setzt werden. So findet die durch Verseifung aus Phosphonobernsteinsäuretetramethylester darstellbare Phosphonobernsteinsäure gemäß DE-OS 1 767 391 als Sequestriermittel in alkalischen Reinigern Verwendung. Durch alkalisch katalysierte Michael-Addition an geeignet substituierte, ungesättigte Carbonsäureester und anschließende Verseifung werden aus Phosphonobernsteinsäureestern die Stein- und Korrosionschutzmittel 2-Phosphonobutan-1,2,4-tricarbonsäure, 3-Methyl-2-phosphonobutan-1,2,4-tricarbonsäure, 2-Phosphonopentan-1,2,4-tricarbonsäure, 2-Phosphonobutan-1,2,3,4-tetracarbonsäure (DE-OS 2 061 838) sowie 2-Phosphonopentan-1,2,4,5-tetracarbonsäure (JP 58 126 895, Dainippon Ink and Chemicals Inc.) hergestellt. Die aus Phosphonobernsteinsäuretetraalkylester synthetisierbaren $\alpha$-Alkylphosphonobernsteinsäuren stellen ebenfalls technisch verwendete Steininibitoren dar (DE-OS 2 015 068).

Somit besteht ein großes Interesse Phosphonobernsteinsäuretetraalkylester, insbesondere den Tetramethylester und Tetraethylester in hoher Ausbeute und Reinheit aus leicht zugänglichen und handhabbaren Edukten herstellen zu können.

Bisher standen vier unterschiedliche Synthesewege zur Darstellung von Phosphonobernsteinsäuretetramethylester und Phosphonobernsteinsäuretetraethylester zur Verfügung:

1. Alkalisch katalysierte Michael-Addition von Dimethylphosphit und Diethylphosphit an Maleinsäuredimethylester bzw. Maleinsäurediethylester. - A.N. Pudovik erhielt 1952 mit dieser Reaktion Phosphonobernsteinsäuretetramethylester in 78 %iger, Phosphonbernsteinsäuretetraethylester in 82,3 %iger Ausbeute. Bei seinen Synthesen setzte er die Edukte Maleinsäuredimethylester und Dimethylphosphit im Mol.-Verhältnis 1 : 1,09 bzw. Maleinsäurediethylester und Diethylphosphit im Mol.-Verhältnis 1 : 1,2 ein. Als Katalysator wurden hier "einige Tropfen" Natriummethylat- bzw. Natriummethylatlösung benutzt (A.N. Pudovik, Isz. Akad. Nauk. SSR 1952, 821-824 (engl. Ed.)). Die Reaktion von Diethylphosphit und Fumarsäurediethylester unter Zusatz von halbmolaren Mengen Triethylamin führt nach 8 Stunden bei 80-85° C in 75,8 %iger Ausbeute zum Phosphonobernsteinsäuretetraethylester (JP 51/88636 76/88636, Nissan Chemical Industries, Lit.: Ca. 86 (9): 51576 a). Hohe Ausbeuten an Phosphonobernsteinsäuretetraalkylester erhält man bei der Reaktion von Dibutylphosphit mit Maleinsäureestern längerkettige Alkohole (Dibutylmaleinat 85 %, Di-2-ethylhexylmaleinat 95,5 %). Allerdings müssen in diesem Fall als Katalysatoren Natriumamid bzw. Na-Metall eingesetzt werden und es werden ausschließlich Phosphonobernsteinsäurederivate mit langkettigen Alkylestergruppen sowohl im Phosphonsäureteil wie auch im Carbonsäureteil erhalten (US-PS 2 754 319, Union Carbide and Carbon Corpo ration). Unter Phasentransferkatalyse mit Tetrabutylammoniumbromid (TBAB) führt die Reaktion von Diethylphosphit mit Maleinsäurediethylester und Kaliumcarbonat als Base in 83 %iger Ausbeute zum Phosphonobernsteinsäuretetraethylester (M. Makosza, K. Wojciechowski, Bull. Pol. Acad Sci., Chem., 32, 1984, 3-6, 175-179).

2. Radikalische Addition von Diethylphosphit an Maleinsäurediethylester. - Die radikalische Addition von Diethylphosphit an Maleinsäurediethylester unter Verwendung von Dibenzoylperoxid als Radikalstarter liefert Phosphonobernsteinsäuretetraethylester in einer Ausbeute von nur 12 % (S. Haya-Shimoto, I. Furukawa, Y. Okamoto, Doshisha Daigaku Rikogaku Kerkyu Hokohu 7 (4), 193-202, (1967); Ca. 67: 54218 d).

3. Reaktion von Trialkylphosphit mit Maleinsäuremonoester oder -diestern. - Trimethylphosphit reagiert mit Maleinsäuremonomethylester sowohl unter Addition an die Doppelbindung wie auch unter Veresterung der Carbonsäure zu Phosphonomaleinsäuretetramethylester. Bei einer Reaktionszeit von 18 Stunden bei 25° C wird das Produkt zu 51-65 % (B.M. Trost, L.S. Melvin, J. Am. Chem. Soc., 98 (5) 1204-12 (1976)) gebildet. Die Reaktion unterhalb von 90° C führt zu einer Ausbeute von 65 % Phosphonobernsteinsäuretetramethylester, als Nebenpro dukte treten hier vor allem Fumarsäuredimethylester und $CO_2$ auf (R.R. Hindersinn, N.E. Boyer, Am. Chem Soc. Div. Org. Coatings Plastic Chem., Preprints 23 (1) 50-60 (1963)).

Die Addition von Phosphorigsäuretrialkylestern an Maleinsäuredialkylestern verläuft in guten Ausbeuten nur bei Anwesenheit eine protischen Hilfsstoffes. So beschreibt R. G. Harvey die Synthese von Phosphonobernsteinsäuretetraethylester aus Triethylphosphit und Maleinsäurediethylester bei 100° C (Reaktionszeit 24 h) unter Zusatz der doppelt molaren Menge Phenol in 93 %iger Ausbeute (R.G. Harvey, Tetrahedron 1966, Vol. 22, 2561-73). Die analoge Reaktion von Trimethylphosphit mit Maleinsäuredimethylester unter Zusatz von Phenol liefert Phosphonobernsteinsäuretetramethylester in 81 % Ausbeute (B.M. Trost, L.S. Melvin, J. Am. Chem. Soc. 98 (5), 1204-12 (1976)). Der Ersatz von Phenol gegen Essigsäure führt bei Reaktionstemperaturen von 55-80° C zu einer Ausbeute an Phosphonobernsteinsäuretetramethylester von 80,1 % d.Th. (US 3 400 102, Hooker Chemical Corp.).

4. Reaktion des Phosphonoessigsäuretriethylester-Anions mit Halogenessigsäureethylestern. - Phosphonoessigsäuretriethylester läßt sich mit starken Basen an der zentralen Methylengruppe deprotonieren. Das so erzeugte Anion reagiert mit Chloressigsäureethylester oder Bromessigsäureethylester zu Phosphonobernsteinsäuretetraethylester. Hierbei werden Ausbeuten von 64,5 %. bei Einsatz von Natriumhydrid/ Chloressigsäureethylester (W. Grell, H. Machleidt, Ann. Chem. 693, 134-57 (1966)), sowie 35 % bei Verwendung von Natrium/Bromessigsäureethylester (Zhur. Obshch. Khim. 27, 2367-71 (1957)) erzielt.

Neben den oben aufgeführten Herstellungsmethoden wurde Phosphonobernsteinsäuretetraethylester in 50 %iger Ausbeute bei der Thermolyse von Diethyl-P-1,2-Bis-(ethoxycarbonyl)ethyl-N-phenylphosphonimidat erhalten (A.N. Pudovik, E.S. Batyeva, Yu. N. Girfanova, Zhur. Obshch. Khim. 45 (2), 272-5 (1975) Engl. Ed. 257-9).

Den Verfahren nach Stand der Technik ist gemeinsam, daß sie den Phosphonobernsteinsäuretetramethylester und den Phosphonobernsteinsäuretetraethylester nur in unbefriedigenden Ausbeuten liefern. Ausbeuten über 90 % d. Th. werden nur bei der Synthese von längerkettigen Estern der Phosphonobernsteinsäure (z.B. Butyl, 2-Ethylhexyl) erreicht (US-PS 2 754 319), jedoch auch nur dann, wenn bei dieser Darstellung als katalytisch wirksame Base Na-Metall bzw. Natriumamid eingesetzt wird, Hilfsstoffe, die unter Bildung brennbarer Gase (Wasserstoff bzw. Ammoniak) reagieren. Auch sind solch hohe Ausbeuten nur für Dibutylphosphonobernsteinsäureester erzielt worden. Bei Dimethyl- bzw. Diethylphosphonobernsteinsäureestern sind derart hohe Ausbeuten bislang nicht erreicht worden.

Der Erfindung liegt die Aufgabe zugrunde, ein Verfahren zu entwickeln, nach dem Phosphonobernsteinsäuretetramethylester und Phoshonobernsteinsäuretetraethylester in hohen Ausbeuten und in einfacher Weise dargestellt werden können.

Es wurde nun gefunden, daß sich die Ausbeute an Phosphonobernsteinsäuretetramethylester und Phosphonobernsteinsäuretetraethylester bei der Umsetzung von Ethen1,2-dicarbonsäuredimethylester und -diethylester mit Dimethylphosphit bzw. Diethylphosphit auf weit über 90 % d.Th. steigern läßt, wenn man, im Gegensatz zum Stand der Technik, der bei der Addition von Dimethylphosphit oder Diethylphosphit an Maleinsäuredimethylester bzw. Maleinsäurediethylester mit einem Überschuß an Phosphit-Komponente arbeitet, ein Mol-Verhältnis von Phosphorigsäuredimethylester und Phosphorigsäurdiethylester zu Maleinsäuredimethylester bzw. Maleinsäurediethylester von 1:1 bis 1:1,25, bevorzugt von 1:1 bis 1:1,05 einhält, Reaktionstemperaturen von 30-120° C, vorzugsweise 50-100° C, besonders bevorzugt 50-70° C aufrechterhält, die Umsetzung durch Zugabe von 1-10 Mol-% Natriummethylat als Lösung in Methanol bzw. Natriumethylat als Lösung in Ethanol katalysiert und so die Bildung von Nebenprodukten verhindert.

Die Synthese von Phosphonobernsteinsäuretetramethylester bzw. -tetraethylester nach dem erfindungsgemäßen Verfahren kann sowohl diskontinuierlich wie auch kontinuierlich durchgeführt werden Die Rohstoffe Dial kylphosphit und Maleinsäuredialkylester werden ohne Verwendung eines Lösungsmittels gemischt. Es resultiert eine klare Lösung, die in dieser Form bei Raumtemperatur stabil ist. In dieser Reaktionslösung kann der Maleinsäuredialkylester teilweise durch den entsprechenden Fumarsäuredialkylester ersetzt werden, wobei man zweckmäßigerweise, besonders bei kontinuierlicher Reaktionsführung, das Verhältnis Maleinsäureester zu Fumarsäureester so wählt, daß die Löslichkeit des Fumarsäureesters in der Reaktionslösung nicht überschritten wird. Die Reaktion kann aber auch mit höheren Fumarsäureanteilen durchgeführt werden, indem man entweder ein inertes Lösungsmittel zusetzt, oder die Reaktion mit einem Bodensatz von Fumarsäureester beginnt und dieser sich mit Ablauf der Reaktion dann löst. Durch Zutropfen des Katalysators wird die Reaktion gestartet. Die besten Resultate werden bei diskontinuierlicher Arbeitsweise erzielt, wenn der Katalysator zu einer auf 70° C vorgeheizten Reaktionslösung getropft wird und dann ohne weiteres Heizen mit Hilfe der Zutropfgeschwindigkeit die Reaktionstemperatur bei ca. 70° C gehalten wird. Ebenso ist aber auch eine wesentlich niedrigere oder höhere Reaktionstemperatur möglich.

Das erfindungsgemäße Verfahren soll nun anhand der folgenden Beispiele noch näher erläutert werden. (Bei den gaschromatographischen Untersuchungen der Reaktionsprodukte ist der enthaltende Alkohol (Methanol bzw. Ethanol als Lösungsmittel für den Katalysator nicht berücksichtigt; %-Angaben bedeuten - soweit nichts anderes vermerkt - Gew.-%).

## Beispiel 1

In einem 250 ml-Glaskolben mit Rückflußkühler, Innenthermometer, Rührer und 10 ml-Tropftrichter wird zu einem Gemisch von 72 g Maleinsäuredimethylester (0,50 mol) und 55 g Dimethylphosphit (0,50 mol) innerhalb von 20 min 3 ml einer 4,7m Natriummethylatlösung in Methanol (d. entspricht 2,8 Mol-%) bei 70 °C zugetropft. Anschließend wird noch 60 min. bei 70 °C nachgerührt und das so gewonnene Produkt gaschromatograph untersucht. Das Produkt hat folgende Zusammensetzung:

| | |
|---|---|
| Dimethylphosphit | 0,2 % |
| Methanphosphonsäuredimethylester | 0,2 % |
| Trimethylphosphat | 0,1 % |
| Maleinsäuredimethylester | 0,5 % |
| Phosphonobernsteinsäuretetramethylester | 93,3 % |

## Beispiel 2

Analog Beispiel 1 werden 75,6 g Maleinsäuredimethylester (0,525 mol) und 55 g Dimethylphosphit (0,50 mol) umgesetzt. Das Produkt hat folgende Zusammensetzung:

| | |
|---|---|
| Dimethylphosphit | 0,2 % |
| Methanphosphonsäuredimethylester | 0,2 % |
| Trimethylphosphat | 0,1 % |
| Maleinsäuredimethylester | 3,2 % |
| Phosphonobernsteinsäuretetramethylester | 94,7 % |

## Beispiel 3

Analog Beispiel 1 werden 3,6 g Fumarsäuredimethylester (0,025 mol), 68,4 g Maleinsäuredimethylester (0,475 mol) und 55 g Dimethylphosphit (0,50 mol) umgesetzt. Das Produkt hat folgende Zusammensetzung:

| | |
|---|---|
| Dimethylphosphit | 0,3 % |
| Methanphosphonsäuredimethylester | 0,2 % |
| Trimethylphosphat | 0,1 % |
| Maleinsäuredimethylester | 0,4 % |
| Phosphonobernsteinsäuretetramethylester | 93,1 % |

## Beispiel 4

Analog Beispiel 1 werden 7,6 g Fumarsäuredimethylester (0,053 mol) 68 g Maleinsäuredimethylester (0,472 mol) und 55 g Dimethylphosphit (0,50 mol) umgesetzt. Das Produkt hat folgende Zusammensetzung:

| Dimethylphosphit | 0,1 % |
| Methanphosphonsäuredimethylester | 0,2 % |
| Trimethylphosphat | 0,1 % |
| Maleinsäuredimethylester | 2,8 % |
| Fumarsäuredimethylester | 0,2 % |
| Phosphonobernsteinsäuretetramethylester | 94,9 % |

Beispiel 5

Analog Beispiel 1 werden 86 g Maleinsäurediethylester und 69 g Diethylphosphit umgesetzt. Als Base werden 3 Mol-% Natriumethanolat in Ethanol zugesetzt. Das Produkt hat folgende Zusammensetzung:

| Diethylphosphit | 0,4 % |
| Triethylphosphat | 0,3 % |
| Maleinsäurediethylester | 0,8 % |
| Phosphonobernsteinsäuretetraethylester | 97,1 % |

Beispiel 6

Analog Beispiel 5 werden 90 g Maleinsäurediethylester mit 69 g Diethylphosphit zur Reaktion gebracht. Das Produkt hat folgende Zusammensetzung:

| Diethylphosphit | 0,1 % |
| Triethylphosphat | 0,3 % |
| Maleinsäurediethylester | 3,6 % |
| Phosphonobernsteinsäuretetraethylester | 95,1 % |

Beispiel 7

In einer Kaskade, bestehend aus 3 Rührkesseln, werden in den 1. Kessel 22,5 mol/h Dimethylphosphit (2,475 kg/h = 2,075 l/h) und 23,05 mol/h Maleinsäuredimethylester (3,32 kg/h = 2,875 l/h) und 0,6 mol/h Natriummethylat als 4,7 m Lösung in Methanol bei 100 °C eindosiert. Im 2. Kessel werden noch einmal 0,3 mol/h Natriummethylat als 4,7 m Lösung in Methanol zugegeben. Die mittlere Verweilzeit beträgt 120 min in jedem Reaktor. Die Temperaturen betragen 100 °C in Reaktor 1, 94,5 °C in Reaktor 2 und 50 °C in Reaktor 3. Die gaschromatographische Untersuchung des Ablaufs aus Reaktor 3 bringt folgendes Ergebnis:

5

|  | R 3 (%) |
|---|---|
| DMP | 1,9 |
| MP | 0,4 |
| TMPO | 0,1 |
| MDE | 2,4 |
| MB | 0,2 |
| PBS-E | 94,6 |
| DMP = Dimethylphos- phit; MP = Methanphosp- honsäuredime- thylester, TMPO = Trimethylphos- phat; MDE = Maleinsäuredi- methylester; MB = Methoxyberns- teinsäure; PBS-E = Phosphonober- nsteinsäuretet- ramethylester | |

Beispiele 8 bis 13

In einer Kaskade aus 3 Rührkesseln wird kontinuierlich in den ersten Reaktor je 3,5 mol/h eines Gemisches von äquimolaren Mengen Dimethylphosphit und Maleinsäuredimethylester gepumpt. Die zugesetzte Menge Natriummethylat als 4,7 m Lösung in Methanol sowie die eingehaltenen Temperaturen und mittleren Verweilzeiten in den einzelnen Reaktoren sind zusammen mit dem Ergebnis der gaschromatographischen Analysen (Angaben in Gew-%) der nachfolgenden Tabelle zu entnehmen.

| Zu Beispiel 8 | | | |
|---|---|---|---|
|  | R 1 | R 2 | R 2 |
| Temperatur ($^\circ$C) | 61 | 60 | 59 |
| Mol.-% NaOCH$_3$ | 2,7 | - | - |
| $\tau$ (min) | 120 | 120 | 120 |
| DMP | 2,5 | 1,9 | 1,8 |
| MP | 0,2 | 0,2 | 0,2 |
| TMPO | - | - | 0,1 |
| MDE | 3,2 | 2,2 | 2,2 |
| MB | 0,1 | 0,1 | 0,1 |
| PBS-E | 93,6 | 95,2 | 95,2 |

6

| Zu Beispiel 9 | | | |
|---|---|---|---|
| | R 1 | R 2 | R 2 |
| Temperatur (°C) | 50 | 50 | 36 |
| Mol.-% NaOCH$_3$ | 2,7 | - | - |
| $\tau$ (min) | 30 | 30 | 30 |
| DMP | 1,8 | 1,0 | 0,6 |
| MP | 0,1 | 0,2 | 0,2 |
| TMPO | - | - | 0,1 |
| MDE | 2,1 | 0,6 | 0,2 |
| MB | 9,1 | 0,1 | 0,1 |
| PBS-E | 95,4 | 97,7 | 98,4 |

| Zu Beispiel 10 | | | |
|---|---|---|---|
| | R 1 | R 2 | R 2 |
| Temperatur (°C) | 70 | 70 | 53 |
| Mol.-% NaOCH$_3$ | 2,7 | - | - |
| $\tau$ (min) | 15 | 15 | 15 |
| DMP | 3,1 | 2,4 | 2,1 |
| MP | 0,3 | 0,3 | 0,3 |
| TMPO | - | - | - |
| MDE | 4,4 | 3,4 | 3,0 |
| MB | 0,1 | 0,1 | 0,2 |
| PBS-E | 91,7 | 93,4 | 94,1 |

| Zu Beispiel 11 | | | |
|---|---|---|---|
| | R 1 | R 2 | R 2 |
| Temperatur (°C) | 51 | 50 | 43 |
| Mol.-% NaOCH$_3$ | 2,7 | - | - |
| $\tau$ (min) | 15 | 15 | 15 |
| DMP | 2,9 | 1,4 | 1,3 |
| MP | 0,3 | 0,3 | 0,4 |
| TMPO | - | - | 0,1 |
| MDE | 4,2 | 2,0 | 1,6 |
| MB | 0,1 | 0,1 | 0,1 |
| PBS-E | 92,1 | 95,8 | 96,1 |

| Zu Beispiel 12 | | | |
|---|---|---|---|
| | R 1 | R 2 | R 2 |
| Temperatur ($^\circ$C) | 51 | 50 | 37 |
| Mol.-% NaOCH$_3$ | 1,8 | - | - |
| $\tau$ (min) | 30 | 30 | 30 |
| DMP | 2,8 | 1,2 | 1,0 |
| MP | 0,1 | 0,1 | 0,1 |
| TMPO | - | - | - |
| MDE | 3,7 | 1,4 | 0,9 |
| MB | 0,1 | 0,1 | 0,1 |
| PBS-E | 93,0 | 96,8 | 97,5 |

| Zu Beispiel 13 | | | |
|---|---|---|---|
| | R 1 | R 2 | R 2 |
| Temperatur ($^\circ$C) | 52 | 51 | 40 |
| Mol.-% NaOCH$_3$ | 2,0 | - | - |
| $\tau$ (min) | 15 | 15 | 15 |
| DMP | 3,8 | 2,4 | 2,0 |
| MP | 0,2 | 0,2 | 0,2 |
| TMPO | - | - | - |
| MDE | 5,2 | 3,1 | 2,3 |
| MB | - | - | 0,1 |
| PBS-E | 90,6 | 94,1 | 95,4 |

| Zu Beispiel 14 | | |
|---|---|---|
| | R 1 | R 2 |
| Temperatur ($^\circ$C) | 61 | 61 |
| Mol.-% NaOCH$_3$ | 2,7 | - |
| $\tau$ (min) | 30 | 30 |
| DMP | 3,1 | 2,1 |
| MP | 2,5 | 0,9 |
| TMPO | - | - |
| MDE | 3,4 | 1,0 |
| MB | 0,1 | 0,2 |
| PBS-E | 93,4 | 97,4 |

| Zur Beispiel 15 | | |
|---|---|---|
| | R 1 | R 2 |
| Temperatur (°C) | 71 | 70 |
| Mol.-% NaOCH₃ | 2,7 | - |
| τ (min) | 30 | 30 |
| DMP | 2,7 | 1,5 |
| MP | 0,3 | 0,3 |
| TMPO | - | - |
| MDE | 3,5 | 1,9 |
| MB | 0,1 | 0,1 |
| PBS-E | 93,0 | 95,8 |

| | R 1 | R 2 |
|---|---|---|
| Temperatur (°C) | 70 | 70 |
| Mol.-% NaOCH₃ | 2,7 | - |
| τ (min) | 15 | 15 |
| DMP | 3,7 | 2,0 |
| MP | 0,3 | 0,3 |
| TMPO | - | - |
| MDE | 4,8 | 2,7 |
| MB | 0,1 | 0,1 |
| PBS-E | 90,7 | 94,4 |

**Ansprüche**

1. Verfahren zur Herstellung von Phosphonobernsteinsäuretetramethylester bzw. Phosphonobernsteinsäuretetraethylester aus Dimethylphosphit und Maleinsäuredimethylester bzw. Diethylphosphit und Maleinsäurediethylester in Gegenwart eines alkalischen Katalysators, dadurch gekennzeichnet, daß Dimethylphosphit bzw. Diethylphosphit mit Maleinsäuredimethylester bzw. Maleinsäurediethylester in äquimolaren Mengen oder Maleinsäurediester im Überschuß zur Reaktion gebracht wird.

2. Verfahren nach Anspruch 1, dadurch gekennzeichnet, daß das Mol-Verhältnis Phosphit zu Maleinsäurediester 1:1 bis 1:1,25 beträgt.

3. Verfahren nach Anspruch 1 oder 2, dadurch gekennzeichnet, daß das Mol-Verhältnis Phosphit zu Maleinsäurediester 1:1 bis 1:1,05 beträgt.

4. Verfahren nach den Ansprüchen 1-3, dadurch gekennzeichnet, daß die alkalischen Katalysatoren Natrium-methanolat bzw. Natriumethanolat sind.

5. Verfahren nach den Ansprüchen 1-4, dadurch gekennzeichnet, daß die Konzentration des alkalischen Katalysators 1-10 Mol-% beträgt.

6. Verfahren nach den Ansprüchen 1 bis 5, dadurch gekennzeichnet, daß an Stelle von Maleinsäuredialkylester ein Gemisch aus Maleinsäuredialkylester und Fumarsäuredialkylester eingesetzt wird.